# EUROPEAN PATENT SPECIFICATION

(11) **EP 1 777 175 B1**
(45) Date of publication and mention of the grant of the patent: **23.01.2008**
(21) Application number: 06121706.3
(22) Date of filing: 04.10.2006
(51) Int. Cl.: B65G 9/00

(54) **Directional switches for overhead conveyors**
Weichen für Hängebahnen
Aiguillages pour des convoyeurs aériens

(30) Priority: 19.10.2005 IT MI20051985
(43) Date of publication of application: 25.04.2007
(73) Proprietor: Italmodular S.r.l., 26025 Pandino, CR (IT)
(72) Inventor: Cremonesi, Giambattista, 26025 Pandino (CR) (IT)
(74) Representative: Giambrocono, Alfonso

(56) References cited:
- US-A1- 3 760 739

## Description

The present invention relates to directional switches for guideways, this latter term meaning those runways enabling miscellaneous products (for example beef quarters) to be moved manually along predetermined paths, the products being suspended from the guideway by suspension means (for example hooks) slidable therealong.

If the predetermined path presents bifurcations, directional switches must be provided in the guideway. In practice, these switches are two- or three-way. Deviation from one path to another, or vice versa, is achieved by a relative horizontal deviation arm rotatable about a vertical axis, to be able to assume two positions, one of each of the two paths. As is well known to the expert of the art, in three-way directional switches there are three deviation arms, whereas in two-way switches one is sufficient. A control mechanism enables the three deviation arms of a three-way switch or the one arm of a two-way switch to be moved from one to the other of the two said positions. In known directional switches, this mechanism comprises a vertical control pin which is rotatably fixed to the switch body and can be rotated about its axis. To facilitate this rotation, an operating lever is normally provided, fixed to the upper end of the control pin. A horizontal disc is fixed to the lower end of the control pin. Pre-tensioned helical springs are fixed at one end to the disc, in relative positions eccentric to the control pin, while the other end of the springs is fixed to a relative deviation arm in a position eccentric to the axis of rotation of this arm. The springs maintain the deviation arms in one of their stable equilibrium positions. To make these arms pass from one to the other of their two said positions, said operating lever is moved manually to rotate the control pin through a predetermined angle. Rotation of the control pin causes said disc to rotate, so moving the eccentric points of the disc at which the springs are fixed. The result is that these latter cause the deviation arms to move from one to the other of their stable equilibrium positions, the springs also maintaining the arms in said positions.

In a known variant, two of the three springs can be replaced by a single through spring which in its intermediate part interferes with pegs provided on said disc, the result being the same.

US-A-376073 discloses a two-way directional switch for guidelines, wherein the horizontal deviation arm, rotatable about a relative vertical axis, can be placed in one or the other of its two end angular positions not manually, but using a magnetic field acting on a conductive armature integral with the arm. The direction of the movement of the arm can be reversed by reversing the magnetic field.

The aforedescribed spring directional switches have the drawback that after a few years of use the springs have to be changed. In addition dust can settle in the springs in the long term, to create hygiene problems if the guideways are used in environments in which foods are handled. An object of the present invention is to overcome this drawback. Another object is to provide a directional switch for guideways which is of simpler structure than the aforedescribed known switches.

These objects are attained by the directional switch of the present invention, characterised in that one permanent magnet or one ferromagnetic mass for each deviation arm is fixed to the lower end of the control pin, the deviation arms each presenting respectively a ferromagnetic mass or a permanent magnet, or alternatively two permanent magnets are provided, one rigid with the control pin and the other with the relative deviation arms, such that when the control pin is moved from one to the other of its two angular positions, the deviation arms are dragged or thrust into their other position and maintained therein by the action of magnetic attraction or repulsion.

The invention will be more apparent from the ensuing description of two illustrative embodiments of the invention, namely a three-way directional switch and a two-way directional switch. In this description reference is made to the accompanying drawings, in which:
Figure 1 is a plan view from below of a three-way directional switch according to the invention, with its deviation arms in one of their two angular positions;
Figure 2 is similar to Figure 1, but with the deviation arms in their other angular position;
Figure 3 is an exploded perspective view of the switch components;
Figure 4 is a plan view from below of a two-way switch according to the invention, with its single deviation arm in one of its two angular positions;
Figure 5 is similar to Figure 1, but with its deviation arm in its other angular position.

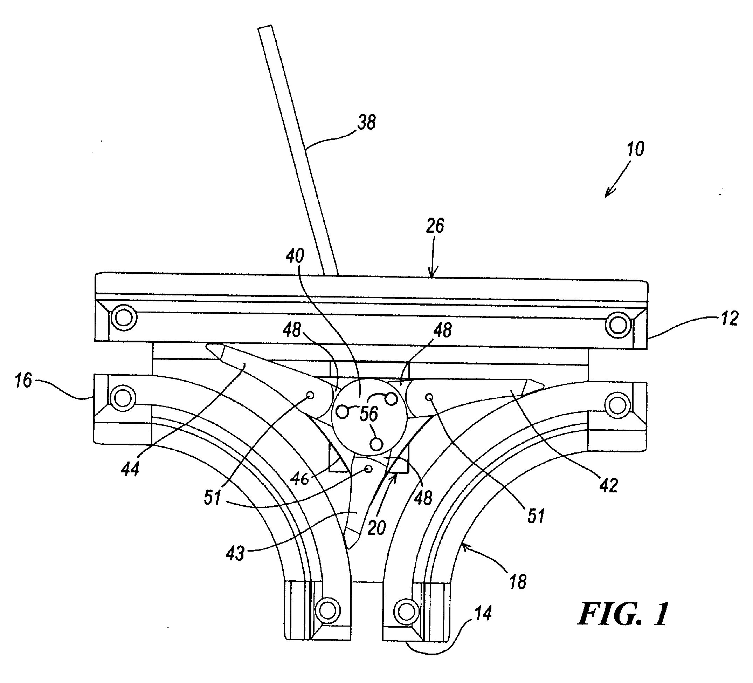

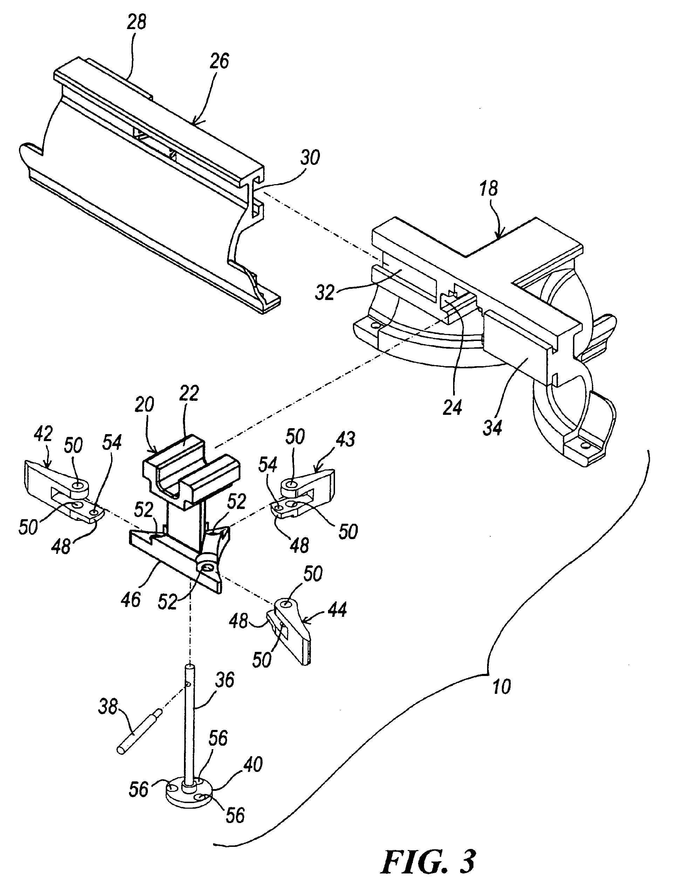

The directional switch for guideways shown in Figures 1-3, and indicated overall by 10, is intended to be connected at its three ends, indicated by 12, 14 and 16 respectively, to relative conventional guideway profiles (not shown for simplicity). As shown in Figure 3, the body of the switch 10 comprises a first part 18, a second part 20 and a third part 26. The second part 20 can be fitted to the first part 18 by virtue of the presence of a portion 22 insertable in position into a matching recess 24 provided in the first part 18. The third part 26 presents both a projection portion 28 and a re-entrant portion 30, insertable as an exact fit into the recess 32 and mount able on the projecting portion 34 provided in the first part 18.

A vertical control pin 36 is supported rotatably by the second part 20 of the body and projects above the first part 18 when the switch is assembled. To the upper end of the control pin 36 one end of an operating lever 38 is fixed, by which the control pin 36 can be rotated manually about its axis, between two predetermined end angular positions. A coaxial disc 40 is fixed to the lower end of the pin 36 to hence rotate together with the control pin 36.

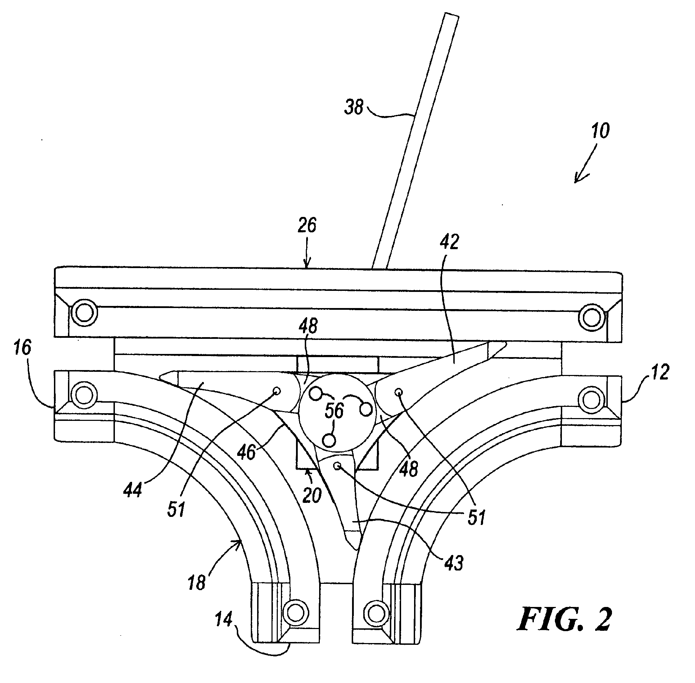

Three horizontal deviation arms 42, 43 and 44 provided with an appendix 48 opposite the actual arm are hinged by relative vertical pins 51 (not shown for simplicity in Figure 3 but visible in Figures 1 and 2) to the lower portion (of roughly triangular shape) of the second body 20. The pins 51 are insertable into vertical through holes 50 (Figure 3) provided in the relative arm 42-44, and into corresponding through holes 52 provided in the lower portion 46 of the second part 20. The appendices 48 of the arms 42-44 present a through hole 54 (visible in Figure 3 only for the arms 42 and 43) into which a permanent magnet indicated by the same reference numeral 54 is forcibly inserted. Corresponding angularly equidistant through holes 56 are also provided in the disc 40 to forcibly receive respective permanent magnets indicated by the same reference numeral 56. The permanent magnets 56 are of reverse polarity to the corresponding equal permanent magnets 54 of the arms 42-44 so that the resultant magnetic field results in attraction between the pairs of permanent magnets 54, 56. With the directional switch 10 assembled, on manually operating the operating lever 38 to rotate the control pin 36, and consequently also the disc 40, from their angular position of Figure 1 to that of Figure 2, the arms 42-44 are also compelled to move from their angular position of Figure 1 to that of Figure 2, because of the mutual attraction action between the permanent magnets of each pair 54 and 56. The intensity of the magnetic field generated by the permanent magnets 54 and 56 must evidently be sufficient to overcome friction. The starting situation (Figure 1) can evidently be restored by a reverse movement of the operating lever 38.

It should be noted that the same result could be obtained by providing permanent magnets in the tangs 48 having the same polarities as those on the disc 40, to in that case utilize the repulsive action generated between them.

As will be apparent to the expert of the art, with the directional switch 10 in the situation of Figure 1, a product suspended by a suspension means (not shown for simplicity), for example a hook, slidable along the guideway and entering the switch 10 via its end 12, can proceed rectilinearly until it leaves from the end 16 of the switch 10. In achieving this the suspension means interferes with the deviation arm 44, causing it to rotate anticlockwise through an angle sufficient to enable the suspension means to pass beyond. The intensity of the magnetic field generated by the permanent magnets must evidently be such as to prevent the suspension means from requiring too much effort to pass beyond the arm 44. When the suspension means has passed, the arm 44 returns automatically into its initial position, again by the action of the corresponding permanent magnets 54 and 56. These latter essentially replace the springs of the aforedescribed known switches.

With the directional switch 10 in the condition of Figure 1, the suspension means can also enter the switch via its end 16 and leave from its end 14, with the result that it deviates its direction of movement through 90 degrees. Again in this case, the suspension means has to move the deviation arm 43 (which will rotate anticlockwise), this latter immediately returning automatically afterwards into its starting position.

The situation of Figure 1 also enables the suspension means to enter via the end 14 of the switch 10 and leave from its end 12 (by moving the arm 42), again in this case obtaining a path deviation of 90 degrees. It will be easily apparent that to undergo paths having the opposite direction to that of the aforedescribed paths (enabled by the situation of Figure 1), the directional switch 10 must be set in the situation of Figure 2. This is easily achieved by manually operating the operating lever 38 to rotate the control pin 36 and disc 40 clockwise (with reference to Figure 1), to hence pass from the situation of Figure 1 to that of Figure 2.

The control mechanism of the directional switch 10 could also be operated non-manually or only manually. It will be apparent to the expert of the art that conventional motorized operating means can be provided for the control device, or electromagnets can be used.

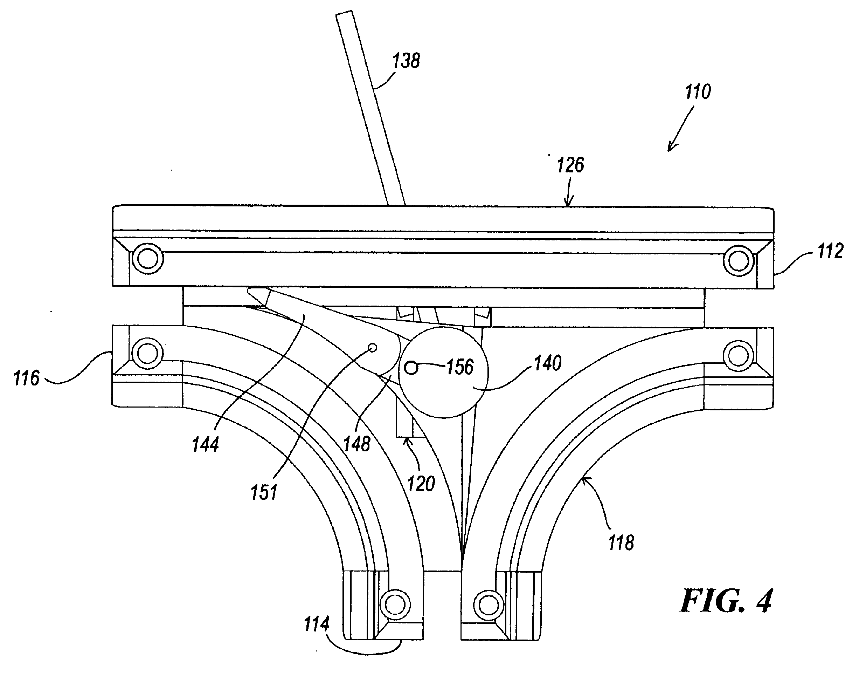

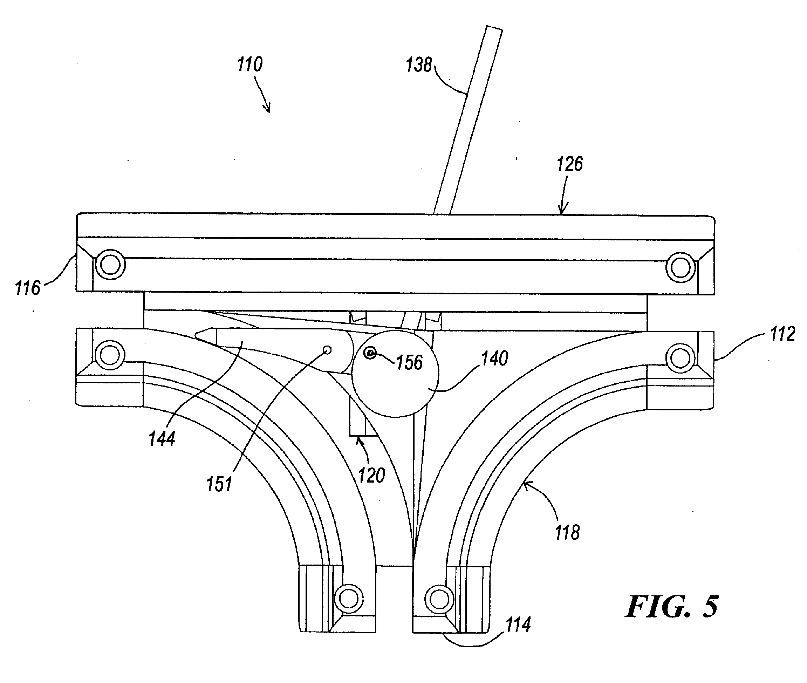

With regard to the two-way directional switch 110 shown in Figures 4 and 5 (in which parts equal or corresponding to those of Figures 1 and 2 are indicated by the same reference numerals plus 100), its structure and operation are already clear from the aforegoing by merely observing these figures. It is sufficient to state that in this case a single deviation arm 144 is present, with a single permanent magnet 156 on the disc 140, the arm 144 being evidently provided with the relative permanent magnet (not visible) positioned in the appendix 148 of the deviation arm 144.

The first part (18; 118), the second part (20; 120) and the third part (26; 126) which form the body of the switches 10 and 110 are conveniently of aluminium or its alloys, as are the arms 42-44 or 144.

Instead of using a pair of permanent magnets 54, 56 for each deviation arm, as a variant a single permanent magnet could evidently be used able to generate a magnetic field of adequate intensity, the other permanent magnet of the pair being replaced by a suitable ferromagnetic mass.

## Claims

1. A two-way (110) or three-way (10) directional switch for guideways, for moving miscellaneous products by suspension means slidable along the guideway, comprising a body (18, 20, 22) and a control mechanism (36, 40) including a vertical control pin (36) and, respectively, one (144) or three (42-44) horizontal deviation arms pivoted to the body such as to be able to rotate, about a relative vertical axis, from one to the other of two end angular positions as a result of rotating the control pin (36) between two end angular positions, wherein one permanent magnet (56) or one ferromagnetic mass for each deviation arm (42-44; 144) is excentrically fixed to the lower end of the control pin (36), the deviation arms (42-44; 144) each presenting respectively a ferromagnetic mass or a permanent magnet (54), or alternatively two permanent magnets (54, 56) are provided, one (56) rigid with the control pin (36) and the other (54) with the relative deviation arms (42-44; 144), such that when the control pin (36) is moved from one to the other of its two angular positions, the deviation arms (42-44; 144) are dragged or thrust into their other position and maintained therein by the action of magnetic attraction or repulsion.

2. A directional switch (10; 110) as claimed in claim 1, wherein the control mechanism (36, 40) is provided with an operating lever (38), one end of which is fixed to the upper end of the control pin (36), the lever (38) allowing manual operation of the control mechanism (36, 40).

3. A directional switch (10; 110) as claimed in claim 1, wherein the control mechanism (36, 40) is operated by motorized operating means or by using electromagnets.

4. A directional switch (10; 110) as claimed in claim 1, wherein the body (18, 20, 22) of the switch (10; 110) is of aluminium or its alloys.

5. A directional switch (10; 110) as claimed in claim 1, wherein the deviation arms (42-44; 144) are of aluminium or its alloys.

6. A directional switch (10; 110) as claimed in claim 1, wherein a disc (40) in which the permanent magnets(56; 156) or the ferromagnetic masses are inserted is fixed to the lower end of the control pin (36).

7. A directional switch (10; 110) as claimed in claim 1, wherein the deviation arms (42-44; 144) present an appendix (48; 148) opposite the actual arm and carrying the relative permanent magnet (54) or the ferromagnetic mass.

## Patentansprüche

1. Zweiwegige (110) oder dreiwegige (10) Weiche für Führungen, um verschiedene Produkte, welche durch Aufhängemittel entlang der Führung gleiten können, zu bewegen, umfassend einen Körper (18, 20, 22) und einen Steuermechanismus (36, 40), welcher einen vertikalen Stift (36) und einen bzw. drei (42-44) horizontale Abzweigungsarme aufweist, welche zu dem Körper geschwenkt werden, um um eine relative vertikale Achse von einer zu der anderen von zwei Endwinkelpositionen abhängig von einem Drehen des Steuerstiftes (36) zwischen zwei Endwinkelpositionen gedreht werden zu können, wobei ein Permanentmagnet (56) oder eine ferromagnetische Masse für jeden Abzweigungsarm (42-44; 144) exzentrisch an dem unteren Ende des Steuerstifts (36) befestigt ist, wobei die Abzweigungsarme (42-44; 144) jeweils entsprechend eine ferromagnetische Masse oder einen Permanentmagnet (54) aufweisen oder alternativ zwei Permanentmagnete (54, 56) vorhanden sind, wobei einer (56) bezüglich des Steuerstifts (36) unbeweglich ist und der andere (54) bezüglich der relativen Abzweigungsarme (42-44; 144) unbeweglich ist, so dass, wenn der Steuerstift (36) von einer zu der anderen seiner zwei Winkelpositionen bewegt wird, die Abzweigungsarme (42-44; 144) durch die Wirkung einer magnetischen Anziehung oder Abstoßung in ihre andere Position gezogen oder geschoben werden oder darin gehalten werden.

2. Weiche (10; 110) nach Anspruch 1, wobei der Steuermechanismus (36, 40) mit einem Betriebshebel (38) versehen ist, wobei ein Ende davon an dem oberen Ende des Steuerstifts (36) befestigt ist, wobei der Hebel (38) eine manuelle Bedienung des Steuermechanismus (36, 40) ermöglicht.

3. Weiche (10; 110) nach Anspruch 1, wobei der Steuermechanismus (36, 40) durch motorisierte Betriebsmittel oder durch Einsatz von Elektromagneten betrieben wird.

4. Weiche (10; 110) nach Anspruch 1, wobei der Körper (18, 20, 22) der Weiche (10; 110) aus Aluminium oder dessen Legierungen ist.

5. Weiche (10; 110) nach Anspruch 1, wobei die Abzweigungsarme (42-44; 144) aus Aluminium oder dessen Legierungen sind.

6. Weiche (10; 110) nach Anspruch 1, wobei eine Scheibe (40), bei welcher die Permanentmagnete (56; 156) oder die ferromagnetischen Massen eingefügt sind, an dem unteren Ende des Steuerstifts (36) befestigt ist.

7. Weiche (10; 110) nach Anspruch 1, wobei die Abzweigungsarme (42-44; 144) einen Ansatz (48; 148) aufweisen, welcher gegenüber dem tatsächlichen Arm liegt und den relativen Permanentmagnet (54) oder die ferromagnetische Masse trägt.

## Revendications

1. Commutateur bidirectionnel (110) ou tridirectionnel (10) pour des guidages, pour déplacer divers produits par des moyens de suspension coulissant le long du guidage, comprenant un corps (18, 20, 22) et un mécanisme de commande (36, 40) comprenant une tige de commande verticale (36) et, respectivement, un (144) ou trois (42 à 44) bras de déviation horizontaux pivotés vers le corps de sorte à pouvoir tourner, autour d'un axe vertical relatif, de l'une à l'autre de deux positions angulaires d'extrémité par suite d'une rotation de la tige de commande (36) entre deux positions angulaires d'extrémité, dans lequel un aimant permanent (56) ou une masse ferromagnétique pour chaque bras de déviation (42 à 44 ; 144) est fixé de manière excentrique à l'extrémité inférieure de la tige de commande (36), les bras de déviation (42 à 44 ; 144) présentant chacun respectivement une masse ferromagnétique ou un aimant permanent (54), ou en variante deux aimants permanents (54, 56) sont prévus, un (56) rigide avec la tige de commande (36) et l'autre (54) avec les bras de déviation relatifs (42 à 44 ; 144), de sorte que lorsque la tige de commande (36) est déplacée de l'une à l'autre de ces deux positions angulaires, les bras de déviation (42 à 44 ; 144) sont tirés ou poussés dans leur autre position et maintenus dans celle-ci par l'action d'attraction ou de répulsion magnétique.

2. Commutateur directionnel (10 ; 110) selon la revendication 1, dans lequel le mécanisme de commande (36, 40) est muni d'un levier de commande (38), dont une extrémité est fixée à l'extrémité supérieure de la tige de commande (36), le levier (38) permettant un fonctionnement manuel du mécanisme de commande (36, 40).

3. Commutateur directionnel (10 ; 110) selon la revendication 1, dans lequel le mécanisme de commande (36, 40) est actionné par un moyen de commande motorisé ou en utilisant des électroaimants.

4. Commutateur directionnel (10 ; 110) selon la revendication 1, dans lequel le corps (18, 20, 22) du commutateur (10; 110) est constitué d'aluminium ou de ses alliages.

5. Commutateur directionnel (10 ; 110) selon la revendication 1, dans lequel les bras de déviation (42 à 44 ; 144) sont constitués d'aluminium ou de ses alliages.

6. Commutateur directionnel (10 ; 110) selon la revendication 1, dans lequel un disque (40) dans lequel les aimants permanents (56 ; 156) ou les masses ferromagnétiques sont insérés, est fixé à l'extrémité inférieure de la tige de commande (36).

7. Commutateur directionnel (10 ; 110) selon la revendication 1, dans lequel les bras de déviation (42 à 44 ; 144) présentent une protubérance (48 ; 148) opposée au bras effectif et portant l'aimant permanent relatif (54) ou la masse ferromagnétique.
